# EUROPEAN PATENT APPLICATION

(11) **EP 4 804 245 A1**
(43) Date of publication of application: **09.09.2026**
(21) Application number: 24884330.2
(22) Date of filing: 27.09.2024
(51) Int. Cl.: H01M 4/13, H01M 4/36, H01M 10/42, H01M 10/0525

(54) **POSITIVE ELECTRODE, LITHIUM BATTERY AND DEVICE**

(30) Priority: 31.10.2023 CN 202311444331
(71) Applicant: BYD Company Limited, Shenzhen, Guangdong 518118 (CN)
(72) Inventor: HE, Long, Shenzhen, Guangdong 518118 (CN); PAN, Yi, Shenzhen, Guangdong 518118 (CN); LIU, Zhengjiao, Shenzhen, Guangdong 518118 (CN); QIU, Zhaozheng, Shenzhen, Guangdong 518118 (CN)
(74) Representative: Mathys & Squire
(86) International application number: PCT/CN2024/121781
(87) International publication number: WO 2025/092325

(57) **Abstract**

A positive electrode, a lithium battery and a device. A positive electrode comprises a positive electrode current collector, and a lithium replenishment layer and a positive electrode material layer which are sequentially stacked on at least one side of the positive electrode current collector, wherein the lithium replenishment layer comprises a first positive electrode lithium replenishment agent, the positive electrode material layer comprises a positive electrode active material and a second positive electrode lithium replenishment agent, the initial coulombic efficiency of the first positive electrode lithium replenishment agent is less than 30%, and the second positive electrode lithium replenishment agent can be decomposed to generate gas.

## Description

This application claims priority to Chinese Patent Application No. 202311444331.X, filed with the China National Intellectual Property Administration on October 31, 2023 and entitled "POSITIVE ELECTRODE, LITHIUM BATTERY, AND APPARATUS", which is incorporated herein by reference in its entirety.

### TECHNICAL FIELD

The present disclosure relates to the technical field of lithium ion batteries, and specifically, to a positive electrode, a lithium battery, and an apparatus.

### BACKGROUND

During first charging of a lithium battery, a solid electrolyte interphase (SEI for short) is formed on a surface of a negative electrode, which consumes active lithium ions in the lithium battery and reduces initial coulombic efficiency and energy density of the battery. To compensate for irreversible consumption of active lithium during first charging, a measure adopted by the industry is to pre-add a lithium supplement agent capable of providing active lithium ions to the lithium battery. Lithium supplement methods for batteries are generally divided into a positive electrode lithium supplement method and a negative electrode lithium supplement method. Compared with the negative electrode lithium supplement method in which metal lithium with high chemical activity is used to perform prelithiation of the negative electrode, the positive electrode lithium supplement method has higher safety and good compatibility with an existing battery preparation process.

A positive electrode lithium supplement technology includes introducing a positive electrode lithium supplement agent that can undergo an irreversible delithiation reaction during first charging into the positive electrode of the battery, to supplement the lithium battery with active lithium ions. Positive electrode lithium supplement agents are mainly divided into two types. The first type is a lithium-rich material with low initial coulombic efficiency, which leaves a part of a main structure or a delithiation product on a positive electrode side after lithium ions are extracted at a specified voltage. The second type is a sacrificial lithium supplement agent that can be decomposed at a specified voltage to generate lithium ions and gas. However, the two types of positive electrode lithium supplement agents have specified problems when used alone in batteries. For example, when the first type of positive electrode lithium supplement agent is used, a positive electrode active material is mixed with the first type of positive electrode lithium supplement agent. This increases liquid phase diffusion impedance of the positive electrode, thereby further reducing battery power performance. For example, a positive electrode coating formed by mixing the second type of positive electrode lithium supplement agent and a positive electrode active material is in direct contact with a positive electrode current collector. Gas generated by decomposition of the positive electrode lithium supplement agent is difficult to discharge smoothly, and residual gas may also increase battery impedance and reduce battery power performance.

Therefore, it is necessary to develop a solution that can balance good positive electrode lithium supplement effect with good battery power performance.

### SUMMARY

In view of this, the present disclosure simultaneously introduces a lithium supplement material having low initial coulombic efficiency and a sacrificial lithium supplement agent that is capable of being decomposed to generate gas into a positive electrode of a battery, and by reasonably arranging positions of the lithium supplement material and the sacrificial lithium supplement agent, the battery can achieve both high battery energy density and good battery power performance.

Specifically, a first aspect of the present disclosure provides a positive electrode, including a positive electrode current collector, and a lithium supplement layer and a positive electrode material layer that are sequentially stacked on at least one side of the positive electrode current collector, wherein the lithium supplement layer contains a first positive electrode lithium supplement agent, the positive electrode material layer includes a positive electrode active material and a second positive electrode lithium supplement agent, wherein initial coulombic efficiency of the first positive electrode lithium supplement agent is less than 30%, and the second positive electrode lithium supplement agent is capable of being decomposed to generate gas.

In the positive electrode of the battery provided in this embodiment of the present disclosure, the first positive electrode lithium supplement agent and the second positive electrode lithium supplement agent are simultaneously introduced, and are arranged in layers as described above, so that problems of high battery impedance and poor power performance caused by use of the first positive electrode lithium supplement agent or the second positive electrode lithium supplement agent alone can be reduced, and the battery can achieve both high energy density and good power performance.

In a possible implementation, the first positive electrode lithium supplement agent includes one or more of Li₆CoO₄, Li₂MoO₃, Li₅FeO₄, Li₆MnO₄, Li₂NiO₂, Li₂CuO₂, Li₃PO₄, Li₄SiO₄, Li₂SiO₃, Li₃VO₄, Li₂VO₃, Li₅ReO₆, Li₂RuO₃, Li₂MnO₃, Li₂MoO₃, Li₂S, and LiF.

In a possible implementation, a surface of the first positive electrode lithium supplement agent has a conductive coating layer.

In a possible implementation, the lithium supplement layer contains the following components in percentage by mass: 50% to 90% of the first positive electrode lithium supplement agent, 0% to 40% of a second positive electrode active material, 0.5% to 10% of a binder, and 0.5% to 10% of a conductive agent.

In a possible implementation, the second positive electrode lithium supplement agent includes one or more of Li₂CO₃, Li₃N, Li₂O₂, Li₂O, Li₂C₂O₄, Li₂C₄O₄, Li₂C₃O₅, and Li₂C₄O₆.

In a possible implementation, in the positive electrode material layer, the second positive electrode lithium supplement agent has a Dv50 of 20 to 500 nm, and the positive electrode active material has a Dv50 of 0.2 to 5 µm.

In a possible implementation, in the positive electrode material layer, a total mass of the second positive electrode lithium supplement agent is 0.5% to 5% of a total mass of the positive electrode active material.

In a possible implementation, a ratio of a lithium supplement capacity provided by the first positive electrode lithium supplement agent to that provided by the second positive electrode lithium supplement agent is (0.2 - 2) : 1.

In a possible implementation, a single-side areal density of the positive electrode material layer is greater than a single-side areal density of the lithium supplement layer.

In a possible implementation, a single-side areal density of the lithium supplement layer is 0.5 to 50 g/m².

In a possible implementation, a single-side areal density of the lithium supplement layer is 0.5 to 20 g/m².

In a possible implementation, the lithium supplement layer has a single-side thickness of 0.1 to 100 µm.

In a possible implementation, the lithium supplement layer has a single-side thickness of 0.5 to 10 µm.

In a possible implementation, the positive electrode material layer includes n positive electrode material sublayers, n ≥ 2, wherein in a direction from the positive electrode current collector to the positive electrode material layer, a mass ratio of the second positive electrode lithium supplement agent to the positive electrode active material in each positive electrode material sublayer tends to increase.

In a possible implementation, the positive electrode material layer includes n positive electrode material sublayers, n ≥ 2, wherein in a direction from the positive electrode current collector to the positive electrode material layer, a mass ratio of the second positive electrode lithium supplement agent to the positive electrode active material in each positive electrode material sublayer sequentially increases layer by layer.

In a possible implementation, in the n positive electrode material sublayers, at least two adjacent layers meet: Aₘ/(Dₘ/Dₘ₋₁) - Aₘ₋₁ ≥ 5%, wherein
Aₘ₋₁ is a mass ratio of the second positive electrode lithium supplement agent in an (m-1)^{th} positive electrode material sublayer to all the second positive electrode lithium supplement agent in the positive electrode material layer, Aₘ is a mass ratio of the second positive electrode lithium supplement agent in an m^{th} positive electrode material sublayer to all the second positive electrode lithium supplement agent in the positive electrode material layer, Dₘ₋₁ is a thickness of the (m-1)^{th} positive electrode material sublayer, Dₘ is a thickness of the m^{th} positive electrode material sublayer, and m is any integer ranging from 2 to n; and on a same side of the positive electrode current collector, and the (m-1)^{th} positive electrode material sublayer is closer to the positive electrode current collector than the m^{th} positive electrode material sublayer.

In a possible implementation, in the n positive electrode material sublayers, any two adjacent positive electrode material sublayers meet: Aₘ/(Dₘ/Dₘ₋₁) - Aₘ₋₁ ≥ 5%.

In a possible implementation, a mass percentage of the positive electrode active material in each positive electrode material sublayer is more than 80%.

According to a second aspect, the present disclosure provides a lithium battery, wherein the lithium battery includes the positive electrode according to the first aspect of the present disclosure.

By adopting the foregoing positive electrode, the lithium battery can achieve both high energy density and good power performance.

According to a third aspect, the present disclosure provides an apparatus having the lithium battery according to the second aspect of the present disclosure, wherein the apparatus is an electrical device or an energy storage system.

### BRIEF DESCRIPTION OF DRAWINGS

FIG. 1 is a diagram of a structure of a positive electrode according to an embodiment of the present disclosure;
FIG. 2 is a diagram of another structure of a positive electrode according to an embodiment of the present disclosure;
FIG. 3 is a diagram of a structure of a lithium battery according to an embodiment of the present disclosure; and
FIG. 4 is a block diagram of a structure of an apparatus according to an embodiment of the present disclosure.

### DESCRIPTION OF EMBODIMENTS

The following describes technical solutions in embodiments of the present disclosure with reference to accompanying drawings.

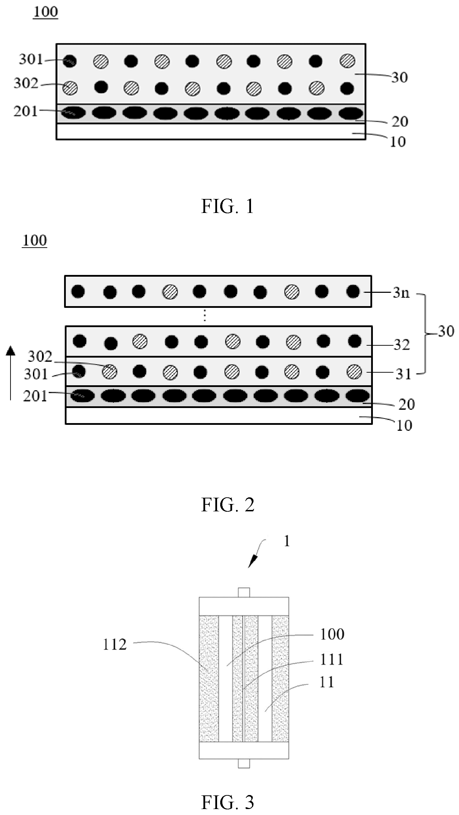

Referring to FIG. 1 and FIG. 2, an embodiment of the present disclosure provides a positive electrode 100, including a positive electrode current collector 10, and a lithium supplement layer 20 and a positive electrode material layer 30 that are sequentially stacked on at least one side of the positive electrode current collector 10. That is, on a same side of the positive electrode current collector 10, the lithium supplement layer 20 is closer to the positive electrode current collector 10 than the positive electrode material layer 30, and the positive electrode material layer 30 is further away from the positive electrode current collector 10 than the lithium supplement layer 20. The lithium supplement layer 20 contains a first positive electrode lithium supplement agent 201, and the positive electrode material layer 30 contains a positive electrode active material 302 and a second positive electrode lithium supplement agent 301. Initial coulombic efficiency of the first positive electrode lithium supplement agent 201 is less than 30%. The second positive electrode lithium supplement agent 301 is capable of being decomposed to release lithium ions and generate gas.

The foregoing positive electrode 100 simultaneously includes two types of positive electrode lithium supplement agents. The second positive electrode lithium supplement agent 301 capable of being decomposed to generate gas is disposed in the positive electrode material layer 30 away from the positive electrode current collector 10. The first positive electrode lithium supplement agent 201 having low initial coulombic efficiency is disposed in the lithium supplement layer 20 close to the positive electrode current collector 10. In one aspect, compared with an existing positive electrode having only the positive electrode material layer 30, when a total lithium supplement capacity remains unchanged, the positive electrode of the present disclosure simultaneously has two types of positive electrode lithium supplement agents, an adding amount of the second positive electrode lithium supplement agent 301 is reduced, and a gas generation amount of decomposition of the second positive electrode lithium supplement agent 301 is correspondingly reduced. In another aspect, because the positive electrode material layer 30 containing the second positive electrode lithium supplement agent 301 is disposed on a surface of the positive electrode 100 and is away from the positive electrode current collector 10, a discharge path of gas released by decomposition of the second positive electrode lithium supplement agent 301 is shortened, which is conducive to gas discharge. In this way, during decomposition of the second positive electrode lithium supplement agent 301, battery polarization is reduced, a decomposition ratio and utilization of the second positive electrode lithium supplement agent 301 is ensured, and lithium supplement efficiency of the first positive electrode lithium supplement agent 201 is also ensured. In addition, less gas remains in the positive electrode 100, battery impedance is reduced, and power performance is improved.

A common particle diameter of the first positive electrode lithium supplement agent 201 is generally in a range of 3 to 10 µm. In an existing positive electrode having only a mixed layer containing the first positive electrode lithium supplement agent 201 and the positive electrode active material, a particle size matching degree of the first positive electrode lithium supplement agent 201 and the positive electrode active material 302 in the mixed layer is not high, and usually a tight stack cannot be formed, which reduces compaction density of the positive electrode sheet and affects energy density of the battery. Compared with the existing positive electrode having only the mixed layer containing the first positive electrode lithium supplement agent 201 and the positive electrode active material, the positive electrode 100 of the present disclosure simultaneously has two types of positive electrode lithium supplement agents under the condition that a total lithium supplement amount remains unchanged, an adding amount of the first positive electrode lithium supplement agent 201 is also reduced, and accordingly, impact of the first positive electrode lithium supplement agent 201 on reducing compaction density of the positive electrode is also reduced. In addition, conductivity of the first positive electrode lithium supplement agent 201 is generally good after active lithium ions are released. Disposing the first positive electrode lithium supplement agent 201 in the lithium supplement layer 20 in contact with the positive electrode current collector 10 is also conducive to ensuring a relatively good conductive network of the entire positive electrode, so that utilization of the lithium supplement agent is improved, the battery impedance is reduced, and the battery power performance is improved.

Therefore, in the foregoing positive electrode 100 according to this embodiment of the present disclosure, the first positive electrode lithium supplement agent and the second positive electrode lithium supplement agent are disposed in layers as described above, so that a synergistic effect can be achieved between the two types of lithium supplement agents and between the two types of lithium supplement agents and the positive electrode active material of the battery. Therefore, utilization of the two types of lithium supplement agents is improved, the energy density of the battery is improved, the battery impedance is reduced, and the power performance is improved.

It will be noted that the second positive electrode lithium supplement agent 301 may be decomposed to release lithium ions. Because after the second positive electrode lithium supplement agent 301 is decomposed to release lithium ions and gas, a main structure does not exist, and therefore the lithium ions cannot be inserted back into the second positive electrode lithium supplement agent 301. This type of lithium supplement agent may also be referred to as a sacrificial lithium supplement agent. Therefore, a concept of "initial coulombic efficiency" does not exist for this type of positive electrode lithium supplement agent. However, the first positive electrode lithium supplement agent 201 can release lithium ions at a relatively high voltage, and still has a part of the main structure or a delithiation product remaining in the positive electrode 100, and has a specific capability of inserting lithium ions back, which is relatively poor. That is, the capability to reversibly release /insert lithium ions is poor, and the initial coulombic efficiency is low (less than 30%), which is much lower than the initial coulombic efficiency (generally more than 60%) of the positive electrode active material 302. The initial coulombic efficiency of the first positive electrode lithium supplement agent 201 may be known by a ratio of a first-cycle discharge capacity to a first-cycle charge capacity of a coin cell made from the positive electrode active material 302. Specifically, a condition of an initial coulombic efficiency test of the first positive electrode lithium supplement agent 201 is as follows: The coin cell is CR2032, positive electrode foil is carbon-coated aluminum foil, and a positive electrode formulation is: first positive electrode lithium supplement agent 201 : conductive agent : binder is 8 : 1 : 1 (mass ratio), a negative electrode is a metal lithium sheet, a separator is a PP separator with a thickness of 14 µm, an electrolyte solution is a mixed solvent of 1M LiPF₆ dissolved in EC/DMC/DEC/EMC = 1 : 1 : 1 : 1 (volume ratio), and the electrolyte is charged to 4.5V at 0.1C and discharged to 2.0V at 0.1C. The first-cycle discharge capacity/first-cycle charge capacity is the initial coulombic efficiency.

In an implementation of the present disclosure, the first positive electrode lithium supplement agent 201 may include one or more of Li₆CoO₄, Li₂MoO₃, Li₅FeO₄, Li₆MnO₄, Li₂NiO₂, Li₂CuO₂, Li₃PO₄, Li₄SiO₄, Li₂SiO₃, Li₃VO₄, Li₂VO₃, Li₅ReO₆, Li₂RuO₃, Li₂MnO₃, Li₂MoO₃, Li₂S, and LiF, but is not limited thereto. In an implementation of the present disclosure, the second positive electrode lithium supplement agent 301 may include one or more of Li₂CO₃, Li₃N, Li₂O₂, Li₂O, Li₂C₂O₄, Li₂C₄O₄, Li₂C₃O₅, and Li₂C₄O₆, but is not limited thereto.

A surface of the first positive electrode lithium supplement agent 201 may have or may not have a conductive coating layer. In some implementations, a surface of the first positive electrode lithium supplement agent 201 has a conductive coating layer. In this case, conductivity of the first positive electrode lithium supplement agent 201 is good, which is conducive to ensuring a relatively good conductive network of the lithium supplement layer 20, thereby reducing the battery impedance, and improving the battery power performance.

In some implementations of the present disclosure, in the positive electrode material layer 30, the positive electrode active material 302 may be selected from one or more of lithium iron phosphate, lithium iron manganese phosphate, lithium manganese oxide, lithium cobalt oxide, a lithium nickel manganese oxide material, a lithium cobalt manganese oxide ternary material, a lithium nickel cobalt aluminum oxide ternary material, a lithium-rich lithium manganese oxide material, and the like. These positive electrode active materials 302 may be undoped or doped and modified, and surfaces of these positive electrode active materials 302 may have or may not have a conductive coating layer. Generally, the lithium iron phosphate and lithium iron manganese phosphate materials generally have a conductive carbon coating layer.

In some implementations of the present disclosure, in the positive electrode material layer 30, a particle diameter of the second positive electrode lithium supplement agent 301 is less than an average particle diameter of the positive electrode active material 302. In some implementations of the present disclosure, in the positive electrode material layer 30, the second positive electrode lithium supplement agent 301 has a Dv50 of 20 to 500 nm, and the positive electrode active material 302 has a Dv50 of 0.2 to 5 µm. In this way, the second positive electrode lithium supplement agent 301 with a relatively small particle size and the positive electrode active material 302 with a relatively large particle size are disposed in a same layer, and a particle size matching degree between the two is relatively high, so that a tight stack can be formed, and compaction density and energy density of the positive electrode 100 are not reduced. In addition, the second positive electrode lithium supplement agent 301 that meets the particle size range has a proper pore diameter generated after decomposition and release of active lithium, so that the positive electrode material layer 30 has a proper pore size, which is conducive to reducing the overall battery impedance and improving the power performance. Dv50 refers to a particle size at which a cumulative volume fraction reaches 50% in a volume-based particle size distribution.

In the present disclosure, the lithium supplement layer 20 may not contain the positive electrode active material 302, or may contain the positive electrode active material 302. In an implementation of the present disclosure, the lithium supplement layer 20 may contain the following components in percentage by mass: 50% to 90% of the first positive electrode lithium supplement agent 201, 0% to 40% of the second positive electrode active material, 0.5% to 10% of the binder, and 0.5% to 10% of the conductive agent. A selection range of the second positive electrode active material can be found in preceding description of the positive electrode active material 302 in the positive electrode material layer 30 of the present disclosure. The second positive electrode active material may be the same as or may be different from the positive electrode active material 302 in the positive electrode material layer 30. Specifically, a mass percentage of the first positive electrode lithium supplement agent 201 in the lithium supplement layer 20 may be 55%, 60%, 65%, 70%, 75%, 80%, 85%, 90%, or the like. A mass percentage of the binder or the conductive agent may be 0.8%, 1%, 1.5%, 2%, 2.5%, 3%, 4%, 5%, 6%, 7%, 8%, 9%, 10%, or the like.

In some implementations of the present disclosure, when the content of the second positive electrode active material in the lithium supplement layer 20 is 0, it is considered that the lithium supplement layer 20 does not contain the positive electrode active material 302. This avoids problems of increased viscosity of positive electrode slurry and difficulty in coating caused by directly mixing the first positive electrode lithium supplement agent 201 with the positive electrode active material 302. Negative impact on the compaction density of the positive electrode 100 due to a low particle size matching degree is also greatly reduced. Furthermore, problems of increased liquid-phase diffusion resistance and slowed lithium-ion liquid-phase transport speed in the positive electrode caused by dispersion of the first positive electrode lithium supplement agent 201 in the positive electrode slurry are avoided, thereby being conducive to reducing the battery impedance.

In some implementations of the present disclosure, a single-side areal density of the positive electrode material layer 30 is greater than a single-side areal density of the lithium supplement layer 20. The positive electrode material layer 30 is a main capacity-supplying layer of the battery, and a single-side areal density of the positive electrode material layer 30 is higher than that of the lithium supplement layer 20, which is conducive to ensuring high energy density and discharge capacity of the battery. The lithium supplement layer 20 is used as an example. The "single-side areal density" herein refers to an areal density of the lithium supplement layer 20 on one side of the positive electrode current collector 10, rather than a sum of areal densities of two lithium supplement layers 20 on two sides of the positive electrode current collector 10.

In an implementation of the present disclosure, a single-side areal density of the lithium supplement layer 20 is 0.5 to 50 g/m². This ensures, to some extent, that a lithium supplement capacity of the first positive electrode lithium supplement agent 201 is appropriate, and ensures that comprehensive performance of the lithium battery is relatively good, which avoids insufficiency lithium supplement effect on the battery caused by the insufficient lithium supplement capacity of the first positive electrode lithium supplement agent 201, and also avoids addition of an excessive quantity of the first positive electrode lithium supplement agent 201, thereby ensuring that a lithium supplement amount does not exceed a reasonable range designed for the current battery. In some implementations, a single-side areal density of the lithium supplement layer 20 is 0.5 to 20 g/m², for example, specifically 0.8 g/m², 1.0 g/m², 1.2 g/m², 1.5 g/m², 2 g/m², 2.5 g/m², 3.0 g/m², 4.0 g/m², 5.0 g/m², 6.0 g/m², 7.0 g/m², 8.0 g/m², 9.0 g/m², 10.0 g/m², 15.0 g/m², or 20.0 g/m². This is more conducive to both high positive electrode specific capacity (per gram) and high initial coulombic efficiency of the battery, as well as high utilization of the lithium supplement agent.

In an implementation of the present disclosure, a single-side areal density of the positive electrode material layer 30 is 50 to 1000 g/m², for example, specifically 60 g/m², 80 g/m², 100 g/m², 150 g/m², 200 g/m², 210 g/m², 220 g/m², 250 g/m², 300 g/m², 350 g/m², 400 g/m², 450 g/m², or the like. In some implementations, a single-side areal density of the positive electrode material layer 30 is 100 to 500 g/m².

In an implementation of the present disclosure, a single-side thickness of the lithium supplement layer 20 is less than a single-side thickness of the positive electrode material layer 30. This is also conducive to ensuring a high energy density of the battery.

In an implementation of the present disclosure, a single-side thickness of the lithium supplement layer 20 may be in a range of 0.1 to 100 µm, and may further be 0.1 to 50 µm, 0.5 to 20 µm, or the like. In some implementations, a single-side thickness of the lithium supplement layer 20 is in a range of 0.5 to 10 µm, for example, specifically 1.0 µm, 2.0 µm, 3.0 µm, 4.0 µm, 5.0 µm, 6.0 µm, 7.0 µm, 8.0 µm, or 9 µm. In this case, the lithium supplement layer 20 containing the first positive electrode lithium supplement agent 201 can ensure that a total capacity of the positive electrode 100 and the energy density of the battery cell are not reduced due to an excessive thickness of the lithium supplement layer 20 when gas production of the positive electrode 100 is relatively low and the battery impedance is relatively low during first charging of the battery. In an implementation of the present disclosure, a single-side thickness of the positive electrode material layer 30 may be in a range of 25 to 500 µm, for example, specifically, 30 µm, 50 µm, 80 µm, 100 µm, 120 µm, 150 µm, 200 µm, 220 µm, 250 µm, 300 µm, 350 µm, 400 µm, 450 µm, or the like. In some implementations, a single-side thickness of the positive electrode material layer 30 is in a range of 50 to 250 µm.

In an implementation of the present disclosure, in the positive electrode material layer 30, a total mass of the second positive electrode lithium supplement agent 301 is 0.5% to 5% of a total mass of the positive electrode active material 302, for example, specifically 0.5%, 1%, 1.5%, 2%, 2.5%, 3%, 3.5%, 4%, 4.5%, or 5%. This can ensure that the second positive electrode lithium supplement agent 301 supplements irreversible consumption of active lithium of the battery, and prevent a reversible capacity of the positive electrode 100 of the battery from being not too small and prevent the positive electrode 100 from generating too much gas. This parameter range is applicable regardless of whether the positive electrode material layer 30 includes one layer (as shown in FIG. 1) or a plurality of layers (that is, a quantity of layers ≥ 2, as shown in FIG. 2). In some implementations, in the positive electrode material layer 30, a total mass of the second positive electrode lithium supplement agent 301 is 1% to 5% of a total mass of the positive electrode active material 302.

In an implementation of the present disclosure, in the positive electrode 100, a ratio of a lithium supplement capacity provided by the first positive electrode lithium supplement agent 201 to that provided by the second positive electrode lithium supplement agent 301 is (0.2 - 2) : 1. This is conducive to improving comprehensive performance of the lithium battery, and particularly conducive to reducing a DCIR value of the battery and improving utilization of the lithium supplement agent, and the like, where a DCIR value represents a direct current internal resistance of the battery, and is one of important parameters for evaluating performance of the lithium-ion battery. Measurement of the DCIR value considers all components of the internal resistance of the battery and is therefore also called dynamic resistance. A magnitude of the DCIR value has an important impact on performance and a service life of the battery. The smaller the DCIR value, the better charge/discharge performance of the battery and the longer the service life of the battery. The larger the DCIR value, the worse the power performance of the battery. The lithium supplement capacity provided by each lithium supplement agent is equal to a product of a mass of the lithium supplement agent and a specific capacity (per gram) of the lithium supplement agent. The specific capacity (per gram) herein is calculated based on a quantity of active lithium ions actually released during lithium supplement of each lithium supplement agent commonly known in the industry. For example, a specific capacity (per gram) of Li₅FeO₄ corresponds to a theoretical specific capacity (per gram) for releasing four lithium ions. A specific capacity (per gram) of Li₆CoO₄ corresponds to a theoretical specific capacity (per gram) for releasing five lithium ions. A specific capacity (per gram) of Li₂CuO₂ corresponds to a theoretical specific capacity (per gram) for releasing one lithium ion. A specific capacity (per gram) of Li₂CO₃ corresponds to a theoretical specific capacity (per gram) for releasing two lithium ions. A specific capacity (per gram) of Li₂C₂O₄ corresponds to a theoretical specific capacity (per gram) for releasing two lithium ions. A specific capacity (per gram) of Li₃N corresponds to a theoretical specific capacity (per gram) for releasing three lithium ions.

In the present disclosure, when the positive electrode material layer 30 is one layer (as shown in FIG. 1), the second positive electrode lithium supplement agent 301 is uniformly dispersed in the positive electrode active material 302. In some implementations of the present disclosure, the positive electrode material layer 30 is a plurality of layers, and includes n positive electrode material sublayers, where n ≥ 2 (as shown in FIG. 2). In a direction from the positive electrode current collector 10 to the lithium supplement layer 20 (namely a direction from the positive electrode current collector 10 to the positive electrode material layer 30, a direction indicated by an arrow in FIG. 2), a mass ratio of the second positive electrode lithium supplement agent 301 to the positive electrode active material 302 in each positive electrode subcoating tends to increase.

The following explains the increasing trend of the foregoing parameter. In the direction from the positive electrode current collector 10 to the lithium supplement layer 20, subcoatings of the positive electrode material layer 30 may be sequentially denoted as 31, 32, ..., 3n. In this way, a surface of the positive electrode current collector 10 is sequentially provided with the lithium supplement layer 20, a first positive electrode material sublayer 31, a second positive electrode material sublayer 32, ..., and an n^{th} positive electrode material sublayer 3n. If a mass ratio of the second positive electrode lithium supplement agent 301 to the positive electrode active material 302 in the first positive electrode material sublayer 31 is denoted as X₁, a mass ratio of the second positive electrode lithium supplement agent 301 to the positive electrode active material 302 in the second positive electrode material sublayer 32 is denoted as X₂, ..., and a mass ratio of the second positive electrode lithium supplement agent 301 to the positive electrode active material 302 in the n^{th} positive electrode material sublayer 3n is denoted as Xₙ, the foregoing "tends to increase" may be represented as: X₁ ≤ X₂ ≤ X₃... ≤ Xₙ, and Xₙ > X₁, where X₁ is greater than 0. For example, the foregoing "tends to increase" may specifically be: an increase followed by no change followed by another increase, or no change followed by a sequential increase, or a non-sequential increase such as no change followed by an increase followed by no change followed by another increase; or a layer-by-layer increase (for example, X₁ < X₂ < X₃ ... < Xₙ).

The second positive electrode lithium supplement agent 301 is decomposed at a voltage greater than a delithiation potential thereof to generate active lithium ions to supplement the battery, and simultaneously releases gas. Therefore, after decomposition, pores may be left in original positions of the second positive electrode lithium supplement agent 301, thereby increasing porosity of each positive electrode material sublayer. The present disclosure controls the mass ratio of the second positive electrode lithium supplement agent 301 to the positive electrode active material 302 in each positive electrode material sublayer to increase along a direction away from the positive electrode current collector 10. This is conducive to smoothly discharging the gas generated by decomposition of the second positive electrode lithium supplement agent 301 in each positive electrode material sublayer close to the positive electrode current collector 10, and reducing a degree of battery polarization caused by the residual gas. In addition, after the lithium supplement agent is decomposed, the pores generated in each positive electrode material sublayer also form a gradient pore structure, that is, a quantity of pores and porosity in the positive electrode material sublayer close to the positive electrode current collector 10 are small, and porosity of the positive electrode material sublayer further away from the positive electrode current collector 10 is higher. The gradient pore structure is conducive to increasing overall porosity of the positive electrode 100 and reducing a pore tortuosity thereof, thereby reducing overall impedance of the battery and improving power performance of the battery.

In some implementations of the present disclosure, in the direction from the positive electrode current collector 10 to the lithium supplement layer 20 (namely the direction from the positive electrode current collector 10 to the positive electrode material layer 30, the direction indicated by the arrow in FIG. 2) a mass ratio of the second positive electrode lithium supplement agent 301 to the positive electrode active material 302 in each positive electrode subcoating sequentially increases layer by layer. This is conducive to smoothly discharging gas generated during decomposition of the second positive electrode lithium supplement agent 301 in the positive electrode material layer 30, and endows the positive electrode material layer 30, after decomposition, with a pore structure in which porosity sequentially increases along the arrow direction, which is more conducive to reducing the battery impedance.

In some implementations of the present disclosure, in the n positive electrode material sublayers, at least two adjacent layers meet: Aₘ/(Dₘ/Dₘ₋₁) - Aₘ₋₁ ≥ 5%, where Aₘ₋₁ is a mass ratio of the second positive electrode lithium supplement agent 301 in the (m-1)^{th} positive electrode material sublayer to all the second positive electrode lithium supplement agent 301 in the positive electrode material layer 30, Aₘ is a mass ratio of the second positive electrode lithium supplement agent 301 in the m^{th} positive electrode material sublayer to all the second positive electrode lithium supplement agent 301 in the positive electrode material layer 30, and Dₘ₋₁ is a thickness of the (m-1)^{th} positive electrode material sublayer, Dₘ is a thickness of the m^{th} positive electrode material sublayer, and m is any integer in a range of 2 to n. On a same side of the positive electrode current collector 10, the (m-1)^{th} positive electrode material sublayer is closer to the positive electrode current collector 10 than the m^{th} positive electrode material sublayer. That is, when thicknesses of the positive electrode material sublayers are approximately the same, at least two adjacent layers in the first positive electrode material sublayer to the n^{th} positive electrode material sublayer meet: Aₘ - Aₘ₋₁ ≥ 5%, where m is an integer in a range of 2 to n. In this way, after the second positive electrode lithium supplement agent 301 is decomposed, porosity of at least two adjacent positive electrode material sublayers can be clearly distinguished, and the foregoing gradient pore structure has relatively good effect on reducing the battery impedance and improving the power performance. In some implementations of the present disclosure, in the n positive electrode material sublayers, any two adjacent positive electrode material sublayers meet: Aₘ/(Dₘ/Dₘ₋₁) - Aₘ₋₁ ≥ 5%. In some embodiments, Aₘ/(Dₘ/Dₘ₋₁) - Aₘ₋₁ ≥ 10%, for example, 10%, 15%, 20%, 25%, 30%, 40%, 50%, 60%, or the like.

For example, in some embodiments, when thicknesses of the positive electrode material sublayers are approximately the same (that is, Dₘ/Dₘ₋₁ = 1), a difference between mass percentages of the second positive electrode lithium supplement agent 301 in any two adjacent positive electrode material sublayers in a total mass of the second positive electrode lithium supplement agent 301 in the positive electrode material layer 30 is greater than 5%. In other words, when Dₘ/Dₘ₋₁ = 1, any two adjacent positive electrode material sublayers in the n positive electrode material sublayers meet: Aₘ - Aₘ₋₁ ≥ 5%, where m is any integer in a range of 2 to n. If a mass ratio of the second positive electrode lithium supplement agent 301 in the first positive electrode material sublayer 31 to all the second positive electrode lithium supplement agent 301 in the positive electrode material layer 30 is denoted as A₁, a mass ratio of the second positive electrode lithium supplement agent 301 in the second positive electrode material sublayer 32 to all the second positive electrode lithium supplement agent 301 in the positive electrode material layer 30 is denoted as A₂, ..., and a mass percentage of the second positive electrode lithium supplement agent 301 in the n^{th} positive electrode material sublayer 3n to all the second positive electrode lithium supplement agent 301 in the positive electrode material layer 30 is denoted as Aₙ, and if ₘ/Dₘ₋₁=1, |A₂ - A₁|, |A₃ - A₂|, ..., |Aₙ - Aₙ₋₁| are all ≥ 5%, preferably ≥ 10%. A₁ is greater than 0. In some embodiments, when n=2, A₁ = 20%, and A₂ = 80%; or A₁ = 30%, and A₂ = 70%; or A₁ = 40%, and A₂ = 60%; or A₁ = 45%, and A₂ = 55%. When n = 3, A₁ = 23%, A₂ = 33%, and A₃ = 44%; or A₁ = 20%, A₂ = 30%, and A₃ = 50%; or A₁ = 10%, A₂ = 30%, and A₃ = 60%.

In an implementation of the present disclosure, a mass percentage of the positive electrode active material 302 in each positive electrode material sublayer is more than 80%, preferably more than 90%. This is relatively conducive to ensuring that each positive electrode material sublayer provides a relatively high reversible capacity, thereby ensuring that the overall positive electrode 100 has a relatively high reversible capacity. The first positive electrode material sublayer 31 is used as an example. Specifically, a ratio of a mass of the positive electrode active material 302 in the first positive electrode material sublayer 31 to a total mass of the first positive electrode material sublayer 31 is more than 80%, and further more than 90%.

In the present disclosure, single-side areal densities of the positive electrode material sublayers may be the same or different. In some implementations of the present disclosure, the areal densities of the positive electrode material sublayers may be the same. This is conducive to ensuring a more stable laminated structure. It will be noted that the single-side areal density mentioned here and the single-side areal densities of the positive electrode material layer 30 and the lithium supplement layer 20 mentioned earlier in the present disclosure both refer to the single-side areal density of each positive electrode material sublayer before a first cycle (namely formation) of the battery.

In the present disclosure, the positive electrode current collector 10 may include but is not limited to aluminum foil, aluminum alloy foil, a polymer film material coated with metallic aluminum, the foregoing material coated with carbon, or the like. In some implementations of the present disclosure, the positive electrode current collector 10 is aluminum foil. In the present disclosure, a laminated structure (as shown in FIG. 1 and FIG. 2) having the lithium supplement layer 20 and the positive electrode material layer 30 may be formed on one side surface of the positive electrode current collector 10. Alternatively, a laminated structure having the lithium supplement layer 20 and the positive electrode material layer 30 may be formed on each of two opposite side surfaces of the positive electrode current collector 10.

In the present disclosure, the lithium supplement layer 20 may further contain a conductive agent, and the positive electrode material layer 30 may also contain a conductive agent. Each conductive agent may be independently selected from one or more of a conductive carbon black (such as acetylene black, Ketjen black, Super p, 350G carbon black, or the like), a carbon nanotube, a graphene, a carbon fiber, and the like. Specifically, the carbon nanotube may be a single-walled carbon nanotube or a multi-walled carbon nanotube, and the carbon fiber may be an arrayed carbon fiber. In some implementations, the lithium supplement layer 20 and the positive electrode material layer 30 may further include one or more of a binder and a dispersant. Each binder may be independently selected from one or more of polyvinylidene fluoride (PVDF), polytetrafluoroethylene (PTFE), polyolefin (such as polyethylene (PE), and polypropylene (PP)), polyacrylonitrile (PAN), polyacrylic acid (PAA), polyimide (PI), styrene-butadiene rubber (SBR), sodium carboxymethylcellulose (CMC), sodium alginate (SA), gelatin, and the like, but is not limited thereto. Each dispersant may be selected from one or more of polyvinylpyrrolidone (PVP), polyvinyl alcohol (PVA), and the like.

The lithium supplement layer 20 may be obtained by coating and drying primer coating slurry containing the first positive electrode lithium supplement agent 201, the conductive agent, and a solvent. The coating method may include, but is not limited to, one or a combination of methods such as spin coating, brush coating, spray coating, dip coating, and blade coating. Similarly, the positive electrode material layer 30 may be obtained by coating and drying positive electrode slurry containing the positive electrode active material 302, the second positive electrode lithium supplement agent 301, the conductive agent, and the solvent. When the positive electrode material layer 30 is one layer, there is one type of positive electrode slurry. When the positive electrode material layer 30 is a plurality of layers, a quantity of types of the positive electrode slurry used corresponds to a quantity of layers of the positive electrode material layer 30.

The solvents contained in each type of slurry may be the same or different, and may be independently selected from one or more of pyrrolidone (for example, N-methylpyrrolidone (NMP), N-ethylpyrrolidone, or the like), cyclic ether (for example, tetrahydrofuran, methyl tetrahydrofuran), or the like, dimethyl sulfoxide, ketone (for example, acetone, or butanone), lactone (for example, butyrolactone, or caprolactone), or the like, but is not limited thereto. Solid content of each type of slurry is not particularly limited, and can meet coating fluidity and uniformity of the slurry. Generally, solid content of the primer coating slurry may be within a range of 1% to 50%. Solid content of the positive electrode slurry is within a range of 50% to 70%.

In addition, each type of slurry may be simultaneously or sequentially coated in layers, or may be coated on a coating formed by drying of the previous slurry. For example, when the positive electrode material layer 30 is one layer, positive electrode slurry may be directly coated on primer coating slurry (which may be simultaneously or sequentially coated) and then dried together to remove the solvent, and then rolled. If double-side coating is needed, the foregoing operation may be repeated on the other side surface of the positive electrode current collector 10. Alternatively, after a side surface of the positive electrode current collector 10 is coated with the primer coating slurry and dried to form the lithium supplement layer 20, the positive electrode slurry is coated with the lithium supplement layer 20 and dried to form the positive electrode material layer 30, and then rolled.

Referring to FIG. 3, an embodiment of the present disclosure further provides a lithium battery 1. The lithium battery 1 includes a positive electrode 100 according to the embodiment of the present disclosure. Because the positive electrode 100 is used, utilization of the two types of lithium supplement agents in the lithium battery 1 is high, the battery has a high reversible capacity and an improved energy density. In addition, the battery has relatively low impedance and relatively good power performance.

In an implementation of the present disclosure, the lithium battery 1 further includes a negative electrode 11, and a separator 111 and an electrolyte solution 112 that are disposed between the foregoing positive electrode 100 and the negative electrode 11.

The negative electrode 11 generally includes a negative electrode current collector and a negative electrode material layer disposed on at least one side surface of the negative electrode current collector. The negative electrode material layer generally includes a negative electrode active material, a conductive agent, and a binder. In an implementation of the present disclosure, the negative electrode active material may be selected from one or more of a carbon material, a silicon-based material, a tin-based material, and the like. The carbon material includes one or more of soft carbon, hard carbon, graphite, mesophase carbon microspheres, and the like. The silicon-based material may include one or more of elemental silicon, a silicon alloy, a silicon oxide, a silicon-carbon composite material, and the like. The tin-based material may include one or more of elemental tin, a tin oxide, a tin-based alloy, a tin-carbon compound, and the like.

The separator 111 is configured to separate the positive electrode 100 from the negative electrode 11, thereby maintaining insulation and liquid retention characteristics between the positive electrode 100 and the negative electrode 11. The separator 111, the positive electrode 100, and the negative electrode 11 together constitute a battery cell of the battery. The battery cell is accommodated in a battery housing, and is wetted by an electrolyte solution 112 contained in the housing. In some implementations of the present disclosure, the lithium battery 1 may be assembled by using the following method: The positive electrode 100, the separator 111, and the negative electrode 11 are sequentially stacked to form the battery cell; and the battery cell is accommodated in the battery housing, the electrolyte solution is injected, and the battery housing is sealed to form the battery. The battery cell may be either wound or stacked.

The separator may use any separator material in the battery. For example, the separator may include, but is not limited to, a polymer separator such as a single-layer PP (polypropylene) membrane, a single-layer PE (polyethylene) membrane, a double-layer membrane PP/PE, a double-layer membrane PP/PP, and a three-layer PP/PE/PP, a non-woven fabric, or the like. The electrolyte solution includes an electrolyte salt and an organic solvent, where specific types and compositions of the electrolyte salt and the organic solvent are both conventional selections in the field of batteries, and may be selected according to actual needs.

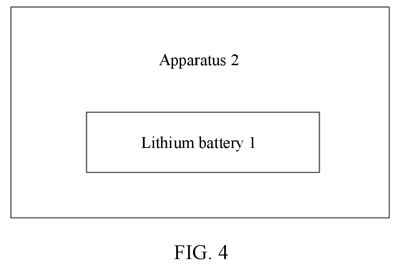

Referring to FIG. 4, an embodiment of the present disclosure further provides an apparatus 2. The apparatus 2 includes the foregoing lithium battery 1 according to the embodiment of the present disclosure. The apparatus 2 may be an electrical device such as a vehicle (such as a car, a motorcycle, or a bicycle), an electric toy, or a 3C product (for example, a mobile phone, a laptop computer, a tablet computer, a pen-input computer, an e-book player, a wearable, or the like), an energy storage system, or the like. The electrical device powered by the foregoing lithium battery 1 has a long operating time and a fast charging speed.

The technical solutions of the present disclosure will be further described below with reference to a plurality of specific examples.

### Example 1

The preparation method of a positive electrode includes the following steps.

A first positive electrode lithium supplement agent (specifically, Li₅FeO₄ with a carbon-coated coating layer, where a mass percentage of a coating layer material is 3wt%) is mixed with a binder PVDF, a conductive agent carbon black, a dispersant PVP, a solvent NMP in a mass ratio of 10 : 1 : 1 : 0.1 : 90, stirring uniformly to obtain primer coating slurry. The primer coating slurry is sprayed onto a surface of a positive electrode current collector aluminum foil, then dried to form aluminum foil with a lithium supplement layer, where a single-side areal density of the lithium supplement layer is 2.41 g/m², and a coating thickness of 3 ± 1 µm.

A positive electrode active material lithium iron phosphate (LFP, having a Dv50 of 3 µm) is uniformly mixed with a binder PVDF, a carbon nanotube conductive agent, a graphene conductive agent, a second positive electrode lithium supplement agent (specifically, Li₂CO₃ having a Dv50 of 200 nm), and a solvent NMP in a mass ratio of 100 : 2.5 : 1 : 0.5 : 1 : 60, to prepare positive electrode slurry. The positive electrode slurry is coated on the lithium supplement layer, and dried to form a positive electrode material layer having a single-side areal density of 200 g/m².

The foregoing operations of forming the lithium supplement layer and the positive electrode material layer are repeated on the other side of the aluminum foil, and then rolling is performed to obtain the positive electrode for use. In the positive electrode, a ratio of a lithium supplement capacity of the first positive electrode lithium supplement agent to that of the second positive electrode lithium supplement agent is about 1 : 1.

Preparation of a lithium battery includes the following steps.
(1) Preparation of a negative electrode: a negative electrode active material graphite, a binder SBR, a thickening agent CMC, a conductive agent carbon black, and a solvent H₂O are uniformly mixed in a mass ratio of 100 : 2 : 2 : 1 : 120 to prepare negative electrode slurry. The negative electrode slurry is coated on a negative electrode current collector copper foil and dried to form a negative electrode material layer having a single-side areal density of 100 g/m².
(2) Battery assembly: The foregoing positive electrode, a separator (specifically, a PP separator with a thickness of 14 µm), and a negative electrode are sequentially stacked to obtain a battery cell. Then, the stacked battery cell is wound and placed in a battery housing. A prepared electrolyte solution is injected after assembling and drying, the battery housing is sealed, and an air bag is reserved to prepare a lithium battery for a subsequent electrical performance test.

### Example 2

Preparation of a positive electrode is provided, which differs from Example 1 in that: there are two positive electrode material layers, first positive electrode slurry and second positive electrode slurry are laminated and coated on a side of the lithium supplement layer. After drying, the first positive electrode slurry forms a first positive electrode material sublayer, and the second positive electrode slurry forms a second positive electrode material sublayer. The first positive electrode material sublayer is close to the lithium supplement layer. The second positive electrode material sublayer is disposed on a side of the first positive electrode material sublayer that is away from the lithium supplement layer. A formulation of the first positive electrode slurry in contact with the lithium supplement layer is: lithium iron phosphate : PVDF : carbon nanotube : graphene : Li₂CO₃:NMP = 100 : 2.6 : 1 : 0.5 : 0.5 : 60. A formulation of the second positive electrode slurry away from the lithium supplement layer is: lithium iron phosphate : PVDF : carbon nanotube : graphene : Li₂CO₃ : NMP = 100 : 2.4 : 1 : 0.5 : 1.5 : 60. A ratio of an areal density of the obtained first positive electrode material sublayer to that of the obtained second positive electrode material sublayer is 1 : 1. A single-side areal density of the entire positive electrode material layer is still 200 g/m². In the positive electrode, a ratio of a lithium supplement capacity of the first positive electrode lithium supplement agent to that of the second positive electrode lithium supplement agent is still 1 : 1.

According to the method recited in Example 1, the positive electrode of Example 2 is assembled into a lithium battery.

### Example 3

The preparation method of a positive electrode includes the following steps.

A first positive electrode lithium supplement agent (specifically, Li₆CoO₄ with a carbon-coated coating layer, where a mass percentage of a coating layer material is 2.5wt%) is mixed with a binder (PVDF), a conductive agent carbon black, PVP, and NMP in a mass ratio of 10 : 1 : 1 : 0.2 : 90, uniformly stirred to obtain primer coating slurry. The primer coating slurry is sprayed onto a surface of aluminum foil, and then dried to form an aluminum foil current collector with a lithium supplement layer, where the lithium supplement layer has a single-side areal density of 2.46 g/m², and a thickness of 3 ± 1 µm.

A positive electrode active material (lithium iron phosphate (LFP, having a Dv50 of 3 µm)) is uniformly mixed with a binder (PVDF), a carbon nanotube, a graphene, a second positive electrode lithium supplement agent (specifically, Li₂C₂O₄ having a Dv50 of 150 nm), and a solvent NMP in a mass ratio of 100 : 2.5 : 1 : 0.5 : 1.4 : 60, to prepare positive electrode slurry. The positive electrode slurry is coated on the lithium supplement layer, and dried to form a positive electrode material layer having a single-side areal density of 200 g/m². In the positive electrode material layer, a total mass of the second positive electrode lithium supplement agent is 1.4% of a total mass of the positive electrode active material.

The foregoing operations of forming the lithium supplement layer and the positive electrode material layer are repeated on the other side of the aluminum foil, and then rolling is performed to obtain the positive electrode for use. In the positive electrode, a ratio of a lithium supplement capacity of the first positive electrode lithium supplement agent to that of the second positive electrode lithium supplement agent is 1.2 : 1.

According to the method recited in Example 1, the positive electrode of Example 3 is assembled into a lithium battery.

### Example 4

Preparation of a positive electrode is provided, which differs from Example 3 in that: there are two positive electrode material layers, and double-layer coating is used. First positive electrode slurry and second positive electrode slurry are sequentially coated on a side of the lithium supplement layer. After drying, the first positive electrode slurry forms a first positive electrode material sublayer, and the second positive electrode slurry forms a second positive electrode material sublayer. The first positive electrode material sublayer is close to the lithium supplement layer, and the second positive electrode material sublayer is disposed on a side of the first positive electrode material sublayer that is away from the lithium supplement layer. The formulation of the first positive electrode slurry in contact with the lithium supplement layer is: lithium iron phosphate : PVDF : carbon nanotube : graphene : Li₂C₂O₄ : NMP = 100 : 2.6 : 1 : 0.5 : 0.7 : 60. The formulation of the second positive electrode slurry away from the lithium supplement layer is: lithium iron phosphate : PVDF : carbon nanotube : graphene : Li₂C₂O₄ : NMP = 100 : 2.4 : 1 : 0.5 : 2.1 : 60. The ratio of an areal density of the first positive electrode material sublayer to that of the obtained second positive electrode material sublayer is controlled to be 1 : 1. The single-side areal density of the entire positive electrode material layer is still 200 g/m². In the positive electrode, a ratio of a lithium supplement capacity of the first positive electrode lithium supplement agent to that of the second positive electrode lithium supplement agent is still 1.2 : 1.

According to the method recited in Example 1, the negative electrode of Example 4 is assembled into a lithium battery.

### Example 5

The preparation method of a positive electrode includes the following steps.

A first positive electrode lithium supplement agent (specifically, Li₂CuO₂ without a coating layer) is mixed with a binder (PVDF), a conductive agent carbon black, PVP, and NMP in a mass ratio of 10 : 1 : 1 : 0.2 : 90, uniformly stirred to obtain primer coating slurry. The primer coating slurry is sprayed onto a surface of aluminum foil, and then dried to form an aluminum foil current collector with a lithium supplement layer, where the lithium supplement layer has a single-side areal density of 4 g/m², and a coating thickness of 5 ± 1 µm.

A positive electrode active material lithium iron phosphate (LFP, having a Dv50 of 3 µm) is uniformly mixed with a binder PVDF, a carbon nanotube, a graphene, a second positive electrode lithium supplement agent (specifically, Li₃N having a Dv50 of 400 nm), and a solvent NMP in a mass ratio of 100 : 2.5 : 1 : 0.5 : 1 : 60, to prepare positive electrode slurry. The positive electrode slurry is coated on the foregoing lithium supplement layer, and dried to form a positive electrode material layer having a single-side areal density of 200 g/m².

The foregoing operations of forming the lithium supplement layer and the positive electrode material layer are repeated on the other side of the aluminum foil, and then rolling is performed to obtain the positive electrode for use. According to the method recited in Example 1, the positive electrode of Example 5 is assembled into a lithium battery.

### Example 6

Preparation of a positive electrode is provided, which differs from Example 5 in that: there are two positive electrode material layers, and double-layer coating is used. First positive electrode slurry and second positive electrode slurry are sequentially coated on a side of the lithium supplement layer. After drying, the first positive electrode slurry forms a first positive electrode material sublayer, and the second positive electrode slurry forms a second positive electrode material sublayer. The first positive electrode material sublayer is close to the lithium supplement layer, and the second positive electrode material sublayer is disposed on a side of the first positive electrode material sublayer that is away from the lithium supplement layer. The formulation of the first positive electrode slurry in contact with the lithium supplement layer is: lithium iron phosphate : PVDF : carbon nanotube : graphene : Li₃N : NMP = 100 : 2.6 : 1 : 0.5 : 0.4 : 60. The formulation of the second positive electrode slurry away from the lithium supplement layer is: lithium iron phosphate : PVDF : carbon nanotube : graphene : Li₃N : NMP = 100 : 2.4 : 1 : 0.5 : 1.6 : 60. The ratio of an areal density of the first positive electrode material sublayer to that of the second positive electrode material sublayer is 1 : 1. The single-side areal density of the entire positive electrode material layer is still 200 g/m².

According to the method recited in Example 1, the positive electrode of Example 6 is assembled into a lithium battery.

### Example 7

Example 7 differs from Example 1 in that: the first positive electrode lithium supplement agent is Li₅FeO₄ without a conductive coating layer on a surface.

### Example 8

The positive electrode in Example 8 mainly differs from Example 1 in that: the lithium supplement layer further contains a positive electrode active material LFP.

The lithium supplement layer is obtained by coating and drying primer coating slurry that is obtained by mixing the foregoing first positive electrode lithium supplement agent with lithium iron phosphate (LFP, having a Dv50 is 3 µm), a binder PVDF, a conductive agent carbon black, a dispersant PVP, and a solvent NMP in a mass ratio of 6 : 4 : 1 : 1 : 0.1 : 90. The lithium supplement layer has a single-side areal density of 3.97 g/m² and a thickness of 4 ± 1 µm.

The positive electrode slurry with the formulation as in Example 1 is coated on the lithium supplement layer, and dried to form a positive electrode material layer having a single-side areal density of 198 g/m².

The foregoing operations of forming the lithium supplement layer and the positive electrode material layer are repeated on the other side of the aluminum foil, and then rolling is performed to obtain the positive electrode. In the positive electrode of Example 8, a ratio of a lithium supplement capacity of the first positive electrode lithium supplement agent to that of the second positive electrode lithium supplement agent is still 1 : 1.

### Example 9

Example 9 mainly differs from Example 1 in that: in the positive electrode of Example 9, a ratio of a lithium supplement capacity of the first positive electrode lithium supplement agent to that of the second positive electrode lithium supplement agent is 0.1 : 1. The primer coating slurry formulation for forming the lithium supplement layer in Example 9 is the same as that in Example 1, but the lithium supplement layer has a single-side areal density of 0.48 g/m² and a coating thickness of 2 ±1 µm.

A positive electrode active material lithium iron phosphate (LFP, having a Dv50 of 3 µm) is uniformly mixed with a binder PVDF, a carbon nanotube conductive agent, a graphene conductive agent, the second positive electrode lithium supplement agent (Li₂CO₃ having a Dv50 of 200 nm), and a solvent NMP in a mass ratio of 100 : 2.5 : 1 : 0.5 : 2 : 60 to prepare positive electrode slurry. The positive electrode slurry is coated on the foregoing lithium supplement layer and dried to form a positive electrode material layer having a single-side areal density of 200 g/m². In the positive electrode material layer, the total mass of the second positive electrode lithium supplement agent is 2% of a total mass of the positive electrode active material.

The foregoing operations of forming the lithium supplement layer and the positive electrode material layer are repeated on the other side of the aluminum foil, and then rolling is performed to obtain the positive electrode for use. In the positive electrode prepared in Example 9, a ratio of the lithium supplement capacity of the first positive electrode lithium supplement agent to that of the second positive electrode lithium supplement agent is 0.1 : 1.

### Example 10

Example 10 mainly differs from Example 1 in that: in Example 10, the ratio of a lithium supplement capacity of the first positive electrode lithium supplement agent to that of the second positive electrode lithium supplement agent is 9 : 1. The primer coating slurry formulation for forming the lithium supplement layer in Example 10 is the same as that in Example 1, but the lithium supplement layer has a single-side areal density of 4.38 g/m² and a coating thickness of 5 ± 1 µm.

A positive electrode active material lithium iron phosphate (LFP, having a Dv50 of 3 µm) is uniformly mixed with a binder PVDF, a carbon nanotube conductive agent, a graphene conductive agent, the second positive electrode lithium supplement agent (Li₂CO₃ having a Dv50 of 200 nm), and a solvent NMP in a mass ratio of 100 : 2.5 : 1 : 0.5 : 0.2 : 60 to prepare positive electrode slurry. The positive electrode slurry is coated on the lithium supplement layer and dried to form a positive electrode material layer having a single-side areal density of 200 g/m². In the positive electrode material layer, the total mass of the second positive electrode lithium supplement agent is 0.2% of a total mass of the positive electrode active material.

The foregoing operations of forming the lithium supplement layer and the positive electrode material layer are repeated on the other side of the aluminum foil, and then rolling is performed to obtain the positive electrode for use. In the positive electrode prepared in Example 10, a ratio of a lithium supplement capacity of the first positive electrode lithium supplement agent to that of the second positive electrode lithium supplement agent is 9 : 1, and the total mass of the second positive electrode lithium supplement agent is 0.2% of a total mass of the positive electrode active material.

### Example 11

Example 11 mainly differs from Example 1 in that: the second positive electrode lithium supplement agent has a Dv50 of 600 nm.

### Example 12

Example 12 mainly differs from Example 1 in that: the second positive electrode lithium supplement agent has a Dv50 of 20 nm, and the positive electrode active material-lithium iron phosphate (LFP) has a Dv50 of 0.2 µm.

### Example 13

Example 13 mainly differs from Example 1 in that: the second positive electrode lithium supplement agent has a Dv50 of 500 nm, and the positive electrode active material-lithium iron phosphate (LFP) has a Dv50 of 5 µm.

### Example 14

The positive electrode of Example 14 mainly differs from Example 1 in that: in the positive electrode of Example 14, the total mass of the second positive electrode lithium supplement agent is 0.5% of a total mass of the positive electrode active material, and the ratio of a lithium supplement capacity of the first positive electrode lithium supplement agent to that of the second positive electrode lithium supplement agent is about 3 : 1. The lithium supplement layer has a single-side areal density of 3.65 g/m², and a single-side thickness of 4 ± 1 µm.

A positive electrode active material-lithium iron phosphate (LFP, having a Dv50 of 3 µm) is uniformly mixed with a binder PVDF, a carbon nanotube conductive agent, a graphene conductive agent, the second positive electrode lithium supplement agent (specifically, Li₂CO₃ having a Dv50 of 200 nm), and a solvent NMP in a mass ratio of 100 : 2.5 : 1 : 0.5 : 0.5 : 60 to prepare positive electrode slurry. The positive electrode slurry is coated on the lithium supplement layer and dried to form a positive electrode material layer having a single-side areal density of 200 g/m². In the positive electrode material layer, the total mass of the second positive electrode lithium supplement agent is 0.5% of the total mass of the positive electrode active material.

The foregoing operations of forming the lithium supplement layer and the positive electrode material layer are repeated on the other side of the aluminum foil, and then rolling is performed to obtain the positive electrode for use. According to the method recited in Example 1, the positive electrode of Example 14 is assembled into a lithium battery.

### Example 15

Example 15 mainly differs from Example 1 in that: in the positive electrode of Example 15, the total mass of the second positive electrode lithium supplement agent is 5% of the total mass of the positive electrode active material, and the ratio of a lithium supplement capacity of the first positive electrode lithium supplement agent to that of the second positive electrode lithium supplement agent is about 0.15 : 1. The lithium supplement layer has a single-side areal density of 1.74 g/m² and a single-side thickness of 2 ± 1 µm.

A positive electrode active material lithium iron phosphate (LFP, having a Dv50 of 3 µm) is uniformly mixed with a binder PVDF, a carbon nanotube conductive agent, a graphene conductive agent, a second positive electrode lithium supplement agent (specifically Li₂CO₃ having a Dv50 of 200 nm), and a solvent NMP in a mass ratio of 100 : 2.5 : 1 : 0.5 : 5 : 60 to prepare the positive electrode slurry. The positive electrode slurry is coated on the lithium supplement layer and dried to form a positive electrode material layer having a single-side areal density of 200 g/m². In the positive electrode material layer, the total mass of the second positive electrode lithium supplement agent is 5% of the total mass of the positive electrode active material.

The foregoing operations of forming the lithium supplement layer and the positive electrode material layer are repeated on the other side of the aluminum foil, and then rolling is performed to obtain the positive electrode for use. According to the method recited in Example 1, the positive electrode of Example 15 is assembled into a lithium battery.

### Example 16

The positive electrode of Example 16 mainly differs from Example 1 in that: the lithium supplement layer further contains a positive electrode active material (specifically, LFP having a Dv50 of 3 µm), and the lithium supplement layer has a single-side areal density of 20 g/m² and a single-side thickness of 12 ± 1 µm. The lithium supplement layer is obtained by coating and drying primer coating slurry that is obtained by mixing the foregoing first positive electrode lithium supplement agent with LFP, a binder PVDF, a conductive agent carbon black, a dispersant PVP, and a solvent NMP in a mass ratio of 2 : 8 : 0.2 : 0.2 : 0.1 : 90. In addition, the positive electrode material layer has a single-side areal density of 180 g/m².

Accordingly, in the positive electrode of Example 16, the ratio of a lithium supplement capacity of the first positive electrode lithium supplement agent to that of the second positive electrode lithium supplement agent is about 2.12 : 1.

### Example 17

The positive electrode of Example 17 mainly differs from Example 1 in that: the lithium supplement layer has a single-side areal density of 50 g/m² and a single-side thickness of 30 ± 1 µm. The lithium supplement layer is obtained by coating and drying primer coating slurry that is obtained by mixing the foregoing first positive electrode lithium supplement agent with LFP, a binder PVDF, a conductive agent carbon black, a dispersant PVP, and a solvent NMP in a mass ratio of 0.8 : 9.2 : 0.2 : 0.2 : 0.1 : 90. In addition, the positive electrode material layer has a single-side areal density of 150 g/m².

In the positive electrode prepared in Example 17, the ratio of a lithium supplement capacity of the first positive electrode lithium supplement agent to that of the second positive electrode lithium supplement agent is 2.55 : 1.

### Example 18

Example 18 mainly differs from Example 1 in that: in the positive electrode of Example 18, the ratio of the lithium supplement capacity of the first positive electrode lithium supplement agent to that of the second positive electrode lithium supplement agent is about 2 : 1, where the lithium supplement layer has a single-side areal density of 4.81 g/m² and a single-side thickness of 5 ± 1 µm.

### Example 19

The preparation method of Example 19 mainly differs from that of Example 2 in that: the formulation of first positive electrode slurry in contact with the lithium supplement layer is: lithium iron phosphate : PVDF : carbon nanotube : graphene : Li₂CO₃ : NMP = 100 : 2.6 : 1 : 0.5 : 0.9 : 60, and the formulation of second positive electrode slurry away from the lithium supplement layer is: lithium iron phosphate : PVDF : carbon nanotube : graphene : Li₂CO₃ : NMP = 100 : 2.4 : 1 : 0.5 : 1.1 : 60.

In Example 19, the mass ratio of the second positive electrode lithium supplement agent in the first positive electrode material sublayer formed by drying of the first positive electrode slurry to all the second positive electrode lithium supplement agent in the positive electrode is 45%, and the mass ratio of the second positive electrode lithium supplement agent in the second positive electrode material sublayer formed by drying of the second positive electrode slurry to all the second positive electrode lithium supplement agent in the positive electrode is 55%. In addition, the ratio of an areal density of the first positive electrode material sublayer to that of the second positive electrode material sublayer is still 1 : 1, and the single-side areal density of the entire positive electrode material layer is still 200 g/m². In the positive electrode, the ratio of a lithium supplement capacity of the first positive electrode lithium supplement agent to that of the second positive electrode lithium supplement agent is still 1 : 1.

### Example 20

A positive electrode is provided, which differs from the positive electrode of Example 1 only in that: the positive electrode active material is lithium iron manganese phosphate (LMFP) having a Dv50 of 1 µm.

Preparation of a lithium battery includes the following steps.
(1) Preparation of a negative electrode: a negative electrode active material graphite, a silicon-carbon composite material, a binder SBR, a thickening agent CMC, a conductive agent carbon black, and a solvent H₂O are uniformly mixed in a mass ratio of 90 : 10 : 2 : 2 : 1 : 120 to prepare negative electrode slurry. The negative electrode slurry is coated on a negative electrode current collector copper foil and dried to form a negative electrode material layer having a single areal density of 80 g/m².
(2) Battery assembly: The foregoing positive electrode, a separator (specifically, a PP separator with a thickness of 14 µm), and a negative electrode are sequentially stacked to obtain a battery cell. Then, the stacked battery cell is wound and placed in a battery housing. A prepared electrolyte solution is injected after assembling and drying, the battery housing is sealed, and an air bag is reserved to prepare a lithium battery for a subsequent electrical performance test.

To highlight beneficial effects of the present disclosure, the following Comparative Examples 1 to 8 are further provided in the present disclosure.

### Comparative Example 1

Preparation of a positive electrode is provided, which differs from Example 1 in that: the positive electrode does not contain the first type of positive electrode lithium supplement agent and the second type of positive electrode lithium supplement agent.

The preparation method of the positive electrode includes the following steps: Lithium iron phosphate, a binder PVDF, a carbon nanotube conductive agent, a graphene conductive agent, and a solvent NMP are uniformly mixed in a mass ratio of 100 : 2.5 : 1 : 0.5 : 60 to prepare positive electrode slurry. The positive electrode slurry is coated on an aluminum foil current collector, and dried to form a positive electrode material layer having a single-side areal density of 200 g/m². The foregoing operation of forming the positive electrode material layer is repeated on the other side of the aluminum foil, and then rolling is performed to obtain the positive electrode.

According to the method recited in Example 1, the positive electrode of Comparative Example 1 is assembled into a lithium battery.

### Comparative Example 2

A positive electrode of Comparative Example 2 differs from Example 7 in that: a mixed layer containing the first positive electrode lithium supplement agent and the positive electrode active material is directly disposed on the aluminum foil.

Preparation of the positive electrode of Comparative Example 2 specifically includes the following steps: Lithium iron phosphate, the binder PVDF, a carbon nanotube conductive agent, a graphene conductive agent, a first positive electrode lithium supplement agent (specifically, Li₅FeO₄ without a carbon coating layer on a surface, where a mass percentage of a coating layer material is 3wt%), and a solvent NMP are uniformly mixed in a mass ratio of 100 : 2.5 : 1 : 0.5 : 2 : 60 to prepare positive electrode slurry. The positive electrode slurry is coated on an aluminum foil current collector, and dried to form a positive electrode material layer having a single-side areal density of 200 g/m². The foregoing operation of forming the positive electrode material layer is repeated on the other side of the aluminum foil, and then rolling is performed to obtain the positive electrode.

According to the method recited in Example 1, the positive electrode of Comparative Example 2 is assembled into a lithium battery.

### Comparative Example 3

A positive electrode is provided, which mainly differs from Example 3 in that: a mixed layer containing the second positive electrode lithium supplement agent and the positive electrode active material is directly disposed on the aluminum foil.

Preparation of the positive electrode of Comparative Example 3 specifically includes the following steps: Lithium iron phosphate, a binder PVDF, a carbon nanotube, a graphene, a second positive electrode lithium supplement agent Li₂C₂O₄, and a solvent NMP are uniformly mixed in a mass ratio of 100 : 2.5 : 1 : 0.5 : 3 : 60 to prepare positive electrode slurry. The positive electrode slurry is coated on an aluminum foil current collector, and dried to form a positive electrode material layer having a single-side areal density of 200 g/m². The foregoing operation of forming the positive electrode material layer is repeated on the other side of the aluminum foil, and then rolling is performed to obtain the positive electrode.

According to the method recited in Example 1, the positive electrode of Comparative Example 3 is assembled into a lithium battery.

### Comparative Example 4

A positive electrode is provided, which mainly differs from Example 1 in that: a positive electrode material layer without a lithium supplement agent is disposed on the aluminum foil, and a second lithium supplement layer containing a second positive electrode lithium supplement agent is disposed on the positive electrode active material layer.

A slurry formulation of the positive electrode material layer is the same as that of Example 1, except that the second positive electrode lithium supplement agent is not contained. The positive electrode material layer still has a single-side areal density of 200 g/m². Slurry forming the second lithium supplement layer is obtained by mixing the second positive electrode lithium supplement agent with a binder PVDF, a conductive agent carbon black, a dispersant PVP, and a solvent NMP in a mass ratio of 10 : 1 : 1 : 0.1 : 90. The second lithium supplement layer has a single-side areal density of 4.6 g/m².

According to the method recited in Example 1, the positive electrode of Comparative Example 4 is assembled into a lithium battery.

### Comparative Example 5

A positive electrode is provided, which differs from Example 1 in that: the positive electrode material layer containing the second positive electrode lithium supplement agent in Example 1 is in direct contact with the aluminum foil, and the lithium supplement layer in Example 1 is disposed on a side of the positive electrode material layer that is away from the aluminum foil.

According to the method recited in Example 1, the positive electrode of Comparative Example 5 is assembled into a lithium battery.

### Comparative Example 6

A positive electrode is provided, which mainly differs from Example 4 in that: there is no lithium supplement layer on the aluminum foil current collector. Instead, a first positive electrode material sublayer and a second positive electrode material sublayer are directly stacked in sequence. In Comparative Example 6, a formulation of the first positive electrode slurry for forming the first positive electrode material sublayer close to the current collector is: lithium iron phosphate : PVDF : carbon nanotube : graphene : Li₂C₂O₄ : NMP = 100 : 2.6 : 1 : 0.5 : 1.5 : 60. A formulation of the second positive electrode slurry for forming the second positive electrode material sublayer away from the current collector is: lithium iron phosphate : PVDF : carbon nanotube : graphene : Li₂C₂O₄ : NMP = 100 : 2.4 : 1 : 0.5 : 4.6 : 60. A ratio of an areal density of the first positive electrode material sublayer formed by drying of the first positive electrode slurry to that of the second positive electrode material sublayer formed by drying of the second positive electrode slurry is controlled to be 1 : 1. A single-side areal density of the entire positive electrode material layer is still 200 g/m².

According to the method recited in Example 1, the positive electrode of Comparative Example 6 is assembled into a lithium battery.

### Comparative Example 7

Preparation of a positive electrode is provided, which differs from Comparative Example 1 in that: the positive electrode active material is replaced from lithium iron phosphate to lithium iron manganese phosphate.

The preparation method of the positive electrode includes the following steps: Lithium iron manganese phosphate, a binder PVDF, a carbon nanotube conductive agent, a graphene conductive agent, and a solvent NMP are uniformly mixed in a mass ratio of 100 : 2.5 : 1 : 0.5 : 60 to prepare positive electrode slurry. The positive electrode slurry is coated on an aluminum foil current collector, and dried to form a positive electrode material layer having a single-side areal density of 200 g/m². The foregoing operation of forming the positive electrode material layer is repeated on the other side of the aluminum foil, and then rolling is performed to obtain the positive electrode.

According to the method recited in Example 1, the positive electrode of Comparative Example 7 is assembled into a lithium battery.

### Comparative Example 8

A positive electrode is provided, which differs from Example 7 in that: the lithium supplement layer is arranged on the aluminum foil, and a positive electrode material layer that does not contain the second positive electrode lithium supplement agent is disposed on the lithium supplement layer.

A slurry formulation for forming the lithium supplement layer is the same as that in Example 7, and the lithium supplement layer has a single-side areal density of 4.82 g/m² and a thickness of 5 ± 1 µm. Slurry for forming the positive electrode material layer is obtained by uniformly mixing the positive electrode active material lithium iron phosphate (LFP having a Dv50 of 3 µm) with a binder PVDF, a carbon nanotube conductive agent, a graphene conductive agent and a solvent NMP in a mass ratio of 100 : 2.5 : 1 : 0.5 : 60. The positive electrode material layer has a single-side areal density of 200 g/m².

To strongly support beneficial effects brought by the technical solutions of the present disclosure, the lithium batteries of the foregoing Examples or Comparative Examples are subjected to the following performance tests.
a. Positive electrode specific capacity (per gram) test: At room temperature (25°C), each battery is subjected to constant current and constant voltage charge at 1/3C rate, to an upper limit voltage of 4.6 V (C is a battery capacity) for formation, and a first charging capacity (namely a charging capacity at formation) is recorded. After aging (an aging process is to storage at 45°C for 48h under the condition of 100% SOC, the same below), the battery is discharged at 1/3C to a lower limit voltage of 2.0 V, and the first discharge capacity is calculated. Positive electrode specific capacity (per gram) = First discharge capacity/Mass of positive electrode active material. Initial coulombic efficiency η = First discharge capacity/First charge capacity.
b. Cyclic performance test: At room temperature (25°C), the aged battery is subjected to constant current and constant voltage charge at 1/3C to an upper limit voltage of 3.8 V, and then discharged at 1/3C to a lower limit voltage of 2.0 V. The foregoing charging and discharging steps are repeated 500 times, and a capacity retention rate after 500 cycles is recorded. Capacity retention rate after 500 cycles = discharge capacity of 500^{th} cycle/discharge capacity of first discharge after aging.
c. Battery direct current internal resistance (DCIR) test: At room temperature (25°C), the aged battery is charged at a constant current of 1/3C to an upper limit voltage of 3.8 V, and then discharged at 1/3C to a lower limit voltage of 2.0 V. After three cycles, at 25°C, the battery is charged at a constant current of 1/3C to 50% SOC. A battery voltage after standing for 1 hour is recorded as V₁. Then, the battery is discharged at 1.5C for 30s, and a battery voltage after discharge is recorded as V₂, where DCIR = (V₁ - V₂)/1.5C.
d. Utilization rate test of lithium supplement materials:

To manufacture a non-lithium-supplemented battery corresponding to each lithium-supplemented battery in Examples and Comparative Examples of the present disclosure: Examples 1 to 20, Comparative Examples 2 to 6 and 8 refer to lithium-supplemented batteries, Comparative Example 1 refer to a non-lithium-supplemented battery corresponding to Examples 1 to 19 and Comparative Examples 2 to 6, and Comparative Example 7 refers to a non-lithium-supplemented battery corresponding to Example 20. At room temperature (25°C), the foregoing batteries are charged at a constant current and constant voltage of 1/3C to an upper limit voltage of 4.6 V, and discharged at 1/3C to a lower limit voltage of 2.0 V after aging. A discharge capacity of each lithium-supplemented battery is denoted as C₁, a discharge capacity of the corresponding non-lithium-supplemented battery is denoted as C₂, and then utilization of the lithium supplement material = (C₁ - C₂)/(mass of lithium supplement material * specific capacity (per gram) of lithium supplement material). The specific capacity (per gram) of the lithium supplement material herein is calculated based on a quantity of active lithium ions actually released during lithium supplement of each lithium supplement agent known in the industry.

Relevant test results are summarized in Table 1 below.

**Table 1**

| | Specific capacity (per gram) of positive electrode (mAh/g) | Initial coulombic efficiency (%) | Capacity retention rate after 500 cycles (% ) | DCIR (mΩ) | Utilization of lithium supplement material (%) |
|---|---|---|---|---|---|
| Example 1 | 145.9 | 91.4 | 95.1 | 91 | 93.0 |
| Example 2 | 146.5 | 92.0 | 95.7 | 88 | 95.0 |
| Example 3 | 145.3 | 91.2 | 94.7 | 95 | 90.0 |
| Example 4 | 145.5 | 91.4 | 95.1 | 93 | 92.0 |
| Example 5 | 144.7 | 89.5 | 94.3 | 99 | 87.5 |
| Example 6 | 145.0 | 89.7 | 94.7 | 97 | 87.9 |
| Example 7 | 141.4 | 89.2 | 93.0 | 99 | 73.0 |
| Example 8 | 145.7 | 91.3 | 95.0 | 92 | 92.0 |
| Example 9 | 145.0 | 90.2 | 94.1 | 108 | 79.3 |
| Example 10 | 144.0 | 90.0 | 94.0 | 103 | 79.5 |
| Example 11 | 143.9 | 89.7 | 94.2 | 101 | 82.0 |
| Example 12 | 145.0 | 90.5 | 94.8 | 99 | 90.0 |
| Example 13 | 145.1 | 90.7 | 94.6 | 96 | 91.0 |
| Example 14 | 144.7 | 90.6 | 94.4 | 100 | 85.0 |
| Example 15 | 141.0 | 90.2 | 95.1 | 105 | 81.0 |
| Example 16 | 145.0 | 91.0 | 94.7 | 96 | 90.0 |
| Example 17 | 144.7 | 91.0 | 94.5 | 102 | 85.0 |
| Example 18 | 144.9 | 91.1 | 94.6 | 97 | 91.0 |
| Example 19 | 146.0 | 91.6 | 95.2 | 90 | 93.5 |
| Example 20 | 142.5 | 90.1 | 93.0 | 92 | 92.0 |
| Comparative Example 1 | 138.5 | 89.5 | 92.1 | 125 | \ |
| Comparative Example 2 | 140.5 | 89.0 | 92.5 | 110 | 65.0 |
| Comparative Example 3 | 143.6 | 89.5 | 92.9 | 120 | 77.9 |
| Comparative Example 4 | 143.5 | 89.7 | 93.1 | 115 | 74.8 |
| Comparative Example 5 | 142.5 | 90.0 | 92.1 | 123 | 70.0 |
| Comparative Example 6 | 143.9 | 89.5 | 93.0 | 117 | 79.0 |
| Comparative Example 7 | 138.5 | 89.5 | 92.1 | 130 | \ |
| Comparative Example 8 | 141.7 | 89.6 | 93.1 | 109 | 74.0 |

It can be understood from Examples 1 and 7 and Comparative Examples 1 to 2 and 4 to 5 in Table 1 that when the positive electrode of the battery does not contain the lithium supplement agent (Comparative Example 1), the battery has a low positive electrode specific capacity (per gram) and low initial coulombic efficiency, and a high DCIR value. For comparative Examples 2 and 4 to 5 in which the positive electrode contains only one type of positive electrode lithium supplement agent, or the positive electrode includes two types of positive electrode lithium supplement agents which are not distributed as in Example 1 of the present disclosure (a sum of lithium supplement capacities provided by the lithium supplement agents in the positive electrode approximates to that in Examples 1 and 7), although the positive electrode specific capacity (per gram) and the initial coulombic efficiency of the battery are improved, the DCIR value of the battery is not significantly reduced, and the DCIR value impedance of the battery is still high (which reflects poor power performance of the battery). However, the lithium supplement layer containing the first positive electrode lithium supplement material used in Example 1 of the present disclosure is used as the base coating on the current collector, and furthermore, the positive electrode material layer formed by distributing the second positive electrode lithium supplement material in the positive electrode active material is disposed on the base coating, which can improve the positive electrode specific capacity (per gram) and reduce the battery impedance. In addition, the foregoing similar phenomenon can also be learned from comparison between Comparative Example 3 and Example 3, and from comparison between Comparative Example 6 and Example 4.

In addition, from comparison between Example 1, 9, 10, and 14, it can be understood that in a case that sums of the lithium supplement capacities provided by the lithium supplement agents in the positive electrode approximate to each other, and compositions of the lithium supplement layers and the single-side areal densities of the positive electrode material layers are the same, a ratio of a lithium supplement capacity of the first positive electrode lithium supplement agent to a lithium supplement capacity of the second positive electrode lithium supplement agent being within a range of (0.2 to 2) : 1 is conducive to improving comprehensive performance of the lithium battery, particularly conducive to reducing the DCIR value of the battery and improving utilization of the lithium supplement agent.

From comparison of Examples 1, 12, and 13 with Example 11, it can be understood that when compositions, thicknesses, areal densities, and the like of the layers in the positive electrode are the same, but the Dv50 of the second positive electrode lithium supplement agent and/or the Dv50 of the positive electrode active material are different, the Dv50 of the second positive electrode lithium supplement agent is within a range of 20 to 500 nm and the Dv50 of the positive electrode active material is within a range of 0.2 to 5 µm, which is more conducive to improving the positive electrode specific capacity (per gram) of the battery, further improving energy density of the positive electrode, and reducing the DCIR value of the battery.

In addition, from comparison between Example 1 and Example 7 it can be understood that in a case that other parameters of the positive electrode of the battery are the same, the conductive coating layer on the surface of the first positive electrode lithium supplement agent is more conducive to reducing the battery impedance, improving utilization of the lithium supplement material, and the like. Comparison between Example 20 and Comparative Example 7, in which the positive electrode active material is changed, also exhibits a similar phenomenon to that between Example 1 and Comparative Example 1.

The foregoing examples merely describe several implementations of the present disclosure, and descriptions are relatively specific and detailed, but will not be construed as limiting the scope of the present disclosure. It will be noted that person of ordinary skill in the art may make various modifications and improvements without departing from the concept of the present disclosure, which all fall within the protection scope of the present disclosure. Therefore, the protection scope of the present disclosure shall be determined by the appended claims.

## Claims

1. A positive electrode (100), comprising a positive electrode current collector (10), and a lithium supplement layer (20) and a positive electrode material layer (30) that are sequentially stacked on at least one side of the positive electrode current collector (10), wherein the lithium supplement layer (20) contains a first positive electrode lithium supplement agent (201), and the positive electrode material layer (30) contains a positive electrode active material (302) and a second positive electrode lithium supplement agent (301), wherein initial coulombic efficiency of the first positive electrode lithium supplement agent (201) is less than 30%, and the second positive electrode lithium supplement agent (301) is capable of being decomposed to generate gas.

2. The positive electrode (100) according to claim 1, wherein the first positive electrode lithium supplement agent (201) comprises one or more of Li₆CoO₄, Li₂MoO₃, Li₅FeO₄, Li₆MnO₄, Li₂NiO₂, Li₂CuO₂, Li₃PO₄, Li₄SiO₄, Li₂SiO₃, Li₃VO₄, Li₂VO₃, Li₅ReO₆, Li₂RuO₃, Li₂MnO₃, Li₂MoO₃, Li₂S, and LiF.

3. The positive electrode (100) according to claim 1 or 2, wherein a surface of the first positive electrode lithium supplement agent (201) has a conductive coating layer.

4. The positive electrode (100) according to any one of claims 1 to 3, wherein the lithium supplement layer (20) contains the following components in percentage by mass: 50% to 90% of the first positive electrode lithium supplement agent (201), 0% to 40% of a second positive electrode active material, 0.5% to 10% of a binder, and 0.5% to 10% of a conductive agent.

5. The positive electrode (100) according to any one of claims 1 to 4, wherein the second positive electrode lithium supplement agent (301) comprises one or more of Li₂CO₃, Li₃N, Li₂O₂, Li₂O, Li₂C₂O₄, Li₂C₄O₄, Li₂C₃O₅, and Li₂C₄O₆.

6. The positive electrode (100) according to any one of claims 1 to 5, wherein in the positive electrode material layer (30), the second positive electrode lithium supplement agent (301) has a Dv50 of 20 to 500 nm, and the positive electrode active material (302) has a Dv50 of 0.2 to 5 µm.

7. The positive electrode (100) according to any one of claims 1 to 6, wherein in the positive electrode material layer (30), a total mass of the second positive electrode lithium supplement agent (301) is 0.5% to 5% of a total mass of the positive electrode active material (302).

8. The positive electrode (100) according to any one of claims 1 to 7, wherein a ratio of a lithium supplement capacity provided by the first positive electrode lithium supplement agent (201) to a ratio of a lithium supplement capacity provided by the second positive electrode lithium supplement agent (301) is (0.2 - 2) : 1.

9. The positive electrode (100) according to any one of claims 1 to 8, wherein a single-side areal density of the positive electrode material layer (30) is greater than a single-side areal density of the lithium supplement layer (20).

10. The positive electrode (100) according to any one of claims 1 to 9, wherein the single-side areal density of the lithium supplement layer (20) is 0.5 to 50 g/m².

11. The positive electrode (100) according to claim 10, wherein a single-side areal density of the lithium supplement layer (20) is 0.5 to 20 g/m².

12. The positive electrode (100) according to any one of claims 1 to 11, wherein a single-side thickness of the lithium supplement layer (20) is 0.1 to 100 µm.

13. The positive electrode (100) according to claim 12, wherein a single-side thickness of the lithium supplement layer (20) is 0.5 to 10 µm.

14. The positive electrode (100) according to any one of claims 1 to 13, wherein the positive electrode material layer (30) comprises n positive electrode material sublayers, n ≥ 2, wherein in a direction from the positive electrode current collector (10) to the positive electrode material layer (30), a mass ratio of the second positive electrode lithium supplement agent (301) to the positive electrode active material (302) in each positive electrode material sublayer tends to increase.

15. The positive electrode (100) according to any one of claims 1 to 13, wherein the positive electrode material layer (30) comprises n positive electrode material sublayers, n ≥ 2, wherein in a direction from the positive electrode current collector (10) to the positive electrode material layer (30), a mass ratio of the second positive electrode lithium supplement agent (301) to the positive electrode active material (302) in each positive electrode material sublayer sequentially increases layer by layer.

16. The positive electrode (100) according to claim 14 or 15, wherein in the n positive electrode material sublayers, at least two adjacent sublayers meet: Aₘ/(Dₘ/Dₘ₋₁) - Aₘ₋₁ ≥ 5%, wherein
Aₘ₋₁ is a mass ratio of the second positive electrode lithium supplement agent (301) in an (m-1)^{th} positive electrode material sublayer to all the second positive electrode lithium supplement agent (301) in the positive electrode material layer (30), Aₘ is a mass ratio of the second positive electrode lithium supplement agent (301) in an m^{th} positive electrode material sublayer to all the second positive electrode lithium supplement agent (301) in the positive electrode material layer (30), Dₘ₋₁ is a thickness of the (m-1)^{th} positive electrode material sublayer, Dₘ is a thickness of the m^{th} positive electrode material sublayer, and m is any integer ranging from 2 to n; and on a same side of the positive electrode current collector (10), the (m-1)^{th} positive electrode material sublayer is closer to the positive electrode current collector (10) than the m^{th} positive electrode material sublayer.

17. The positive electrode (100) according to claim 16, wherein in the n positive electrode material sublayers, any two adjacent positive electrode material sublayers meet: Aₘ/(Dₘ/Dₘ₋₁)-Aₘ₋1 ≥ 5%.

18. The positive electrode (100) according to any one of claims 15 to 17, wherein a mass percentage of the positive electrode active material (302) in each positive electrode material sublayer is more than 80%.

19. A lithium battery (1), comprising the positive electrode (100) according to any one of claims 1 to 18.

20. An apparatus (2), comprising the lithium battery (1) according to claim 19, the apparatus (2) being an electrical device or an energy storage system.
